# EUROPÄISCHE PATENTSCHRIFT

(11) **EP 1 093 002 B1**
(45) Veröffentlichungstag und Bekanntmachung des Hinweises auf die Patenterteilung: **07.12.2005**
(21) Anmeldenummer: 00121070.7
(22) Anmeldetag: 28.09.2000
(51) Int. Cl.: G02B 21/24

(54) **Mikroskop und Verfahren zum Wechseln von Objektiven in einem Mikroskop**
Microscope and method for changing microscope objectives
Microscope et procédé de changement d'objectifs de microscope

(30) Priorität: 04.10.1999 US 157436 P
(43) Veröffentlichungstag der Anmeldung: 18.04.2001
(73) Patentinhaber: Leica Microsystems Wetzlar GmbH, 35578 Wetzlar (DE)
(72) Erfinder: Ganser, Michael, 35398 Giessen (DE); Gilbert, Manfred, 35641 Schöffengrund (DE)
(74) Vertreter: Reichert, Werner Franz

(56) Entgegenhaltungen:
- DE-C- 19 742 802
- US-A- 4 695 137
- US-A- 5 337 177
- PATENT ABSTRACTS OF JAPAN vol. 2000, no. 06, 22. September 2000 (2000-09-22) -& JP 2000 089128 A (OLYMPUS OPTICAL CO LTD), 31. März 2000 (2000-03-31)

## Beschreibung

### GEGENSTAND DER ERFINDUNG

Die Erfindung betrifft eine Mikroskop mit einem Mikroskopstatir gemäß Anspruch 1 sowie ein Verfahren zum Objektivwechsel bei einem Mikroskop gemäß Anspruch 8.

### HINTERGRUND UND STAND DER TECHNIK BEZÜGLICH DER ERFINDUNG

Bei der Untersuchung von Schnitten lebender Gewebe wird im Allgemeinen ein aufrechtes Mikroskop verwendet, da von oben beobachtet und gemessen werden muss. Eine Vielzahl von Manipulatoren mit Nadeln bzw. Kapillaren befinden sich im Bereich des Objekts und somit nahme dem Objektiv. Hierfür wird im Allgemeinen ein Mikroskop mit festem Tisch (fixed stage) verwendet, bei dem dann zur Fokussierung die Objektive bewegt werden. Dies ist erforderlich, da die Manipulatoren die Bewegung des Tisches nicht erlauben. Generell sind diese Mikroskope durch die Enge des Aufbaus gekennzeichnet. So zielen z. B. ein Objektiv und mindestens ein Manipulator auf eine Objektstelle. Für diese Anwendungen sind auch spezielle Objektive erforderlich, die an der Spitze besonders schlank ausgebildet sind, um auch den Nadeln einen Ansatz unter einem bestimmten Winkel zu erlauben. Der Ansatz für die Nadeln oder Manipulatoren unter einem bestimmten Winkel ist erforderlich, damit eine gute Einwirkung auf die Präparate möglich ist. Die bei herkömmlichen Mikroskopen verwendeten Objektivrevolver würden aufgrund der im Wesentlichen seitlich verlaufenden Schwenkbewegung zur Kollision zwischen Objektiven und Manipulatoren führen. Bei einer Vielzahl der im Mikroskop betrachteten Objekte handelt es sich um Schnitte, Zellen oder Zellkulturen, die im Allgemeinen mit einer physiologischen Flüssigkeit bedeckt sind. Diese Flüssigkeit ist wiederum abgedeckt. Die Abdeckung ist mit einer Öffnung versehen, durch die die Objektive in die entsprechende Flüssigkeit eintauchen können. Deshalb ist es für den Wechsel der Objektive notwendig, diese zuerst vertikal herauszuziehen, bevor eine Schwenkbewegung möglich wird. Diese vertikale Bewegung wird in der Regel mit der Fokussiereinrichtung durchgeführt. Objektive niederer Vergrößerung haben im Allgemeinen auch einen größeren Arbeitsabstand. Die Schicht der physiologischen Flüssigkeit kann sehr dünn sein (z. B. um die stärkeren Objektive nicht allzu tief eintauchen zu lassen). Die niedrig vergrößernden Objektive müssen dann über die Fukuslage hinaus abgesenkt (und dann wieder angehoben) werden, damit entsprechender Kontakt mit der Flüssigkeit entsteht. Von ZEISS und NIKON werden Objektivwechseleinrichtungen angeboten, die die Schwenkbewegung der Objektive vermeiden. Der Wechsel wird über die Kombination von Linearbewegungen durchgeführt. Das heißt, zum einen wird eine Vertikalbewegung ausgeführt und dann ein Versatz nach vorne oder nach hinten, um somit andere Objektive, die sich auf dem Objektivrevolver befinden, in den Strahlengang zu verfahren. Die hierzu erforderliche Mechanik ist jedoch nicht besonders stabil und erfordert zum anderen eine unerwünscht hohe Betätigungskraft. Ferner erlaubt sie einen Wechsel nur zwischen zwei Objektiven und ist auch nicht sinnvoll motorisierbar. Die gegebenenfalls erforderliche kurzzeitige Absenkung der Objektive (zur Herstellung des Kontakts mit der Flüssigkeit) muss immer noch separat über die Fokuseinrichtung hergestellt werden. Die zur Zeit am Markt befindlichen automatisierten Mikroskope der Firma LEICA mit den Typenbezeichnungen DMRA, RXA und IRBE heben die Objektive vom Präparat ab (für Immersionsobjektive), bevor sich der Objektivrevolver dreht und somit ein anderes Objektiv in den Strahlengang verfährt.

### ZUSAMMENFASSUNG DER ERFINDUNG

Aufgabe der gegenwärtigen Erfindung ist es, eine Objektivwechseleinrichtung zu schaffen, mit der ein einfacher, motorgetriebener, zuverlässiger und kostengünstiger Objektivwechsel ermöglicht wird. Des Weiteren muss die Vorrichtung zum Objektivwechsel dazu geeignet sein, dass während des Objektivwechsels eine erforderliche Vertikalbewegung durchzuführen ist, um die Immersionsobjektive zu wechseln. Hinzu kommt, dass nach dem Objektivwechsel die Präparatstelle schnell und zuverlässig wieder aufgefunden werden soll. Diese Aufgabe wird durch ein Mikroskop gemäß Anspruch 1 und durch ein Verfahren zum Objektivwechsel gemäß Anspruch 8 gelöst.

Vorteil der gegenwärtigen Erfindung ist es, dass der klassische Objektivrevolver mit Drehbewegung kostengünstig und präzise ist. Die Drehbewegung eines Objektivrevolvers ist einfach und zuverlässig zu motorisieren. Liegt nun die Drehachse schräg zu einer Seitenwand des Mikroskopstativs, so erfolgt die Schwenkbewegung der Objektive in oder aus der Arbeitsposition im Wesentlichen in einer Bewegung, die einem Vor oder Zurück gleicht. Mit anderen Worten, die Bewegung des Objektivs im Bereich der Arbeitsposition ist im Wesentlichen linear. Dies hat insbesondere den Vorteil, dass durch diese Bewegung eine Kollision der am Objektivrevolver befestigten Objektive mit den Manipulatoren vermieden wird. Es ist selbstverständlich, dass ein derart schräg angeordneter Objektivrevolver auch mit mehr als zwei Objektiven bestückt werden kann, ohne unhandlich zu werden und ohne dass die oben stehend beschriebenen Vorteile der Anordnung bzw. des Objektivrevolvers verloren gehen. Ein weiterer Vorteil ergibt sich im Zusammenwirken der Motorisierung der Feinvorrichtung und der Motorisierung des Objektivrevolvers. So kann eine als ideal betrachtete Bewegungsform durch zwei verschiedene Motorisierungen erreicht werden. Somit ist eine Automatisierung des Bewegungsablaufs beim Objektivwechsel gegeben und gleichzeitig wird auch eine erneute Scharfstellung erreicht.

### KURZE BESCHREIBUNG DER ZEICHNUNGEN

Der Gegenstand der Erfindung ist unter Bezugnahme auf Ausführungsformen beschrieben, die in den nachstehenden Zeichnungen dargestellt sind. Dabei zeigt
- Fig. 1: eine Seitenansicht eines Mikroskops aus dem Stand der Technik;
- Fig. 2: eine Seitenansicht eines Mikroskops gemäß der Erfindung;
- Fig. 3: eine Frontalansicht des Mikroskops der gegenwärtigen Erfindung; und
- Fig. 4: eine schematische Darstellung der Anordnung eines Tisches und des erfindungsgemäßen Mikroskops.

### DETAILLIERTE BESCHREIBUNG DER ERFINDUNG

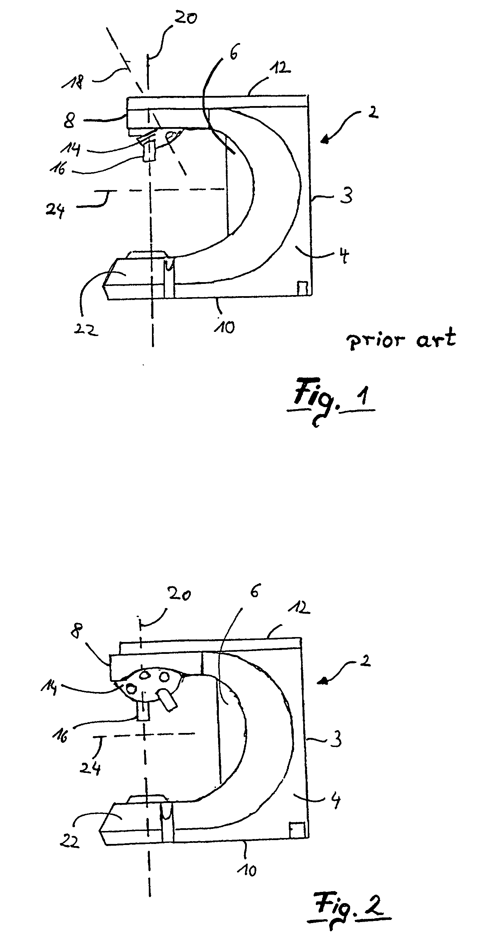

Fig. 1 zeigt ein Mikroskop gemäß dem Stand der Technik. Das Mikroskop besteht aus einem Stativ 2, das durch eine erste und zweite Seitenwand 4 und 6 und durch eine Stirnwand 8 definiert ist. Die erste und zweite Seitenwand 4 und 6 sind ebenfalls über eine Rückwand 3 miteinander verbunden. Ferner besteht das Mikroskop aus einem Fußteil 10 und einem Kopfteil 12. Im Kopfteil 12 ist ein Objektivrevolver 14 angebracht, der mehrere Objektive 16 trägt, die durch den Objektivrevolver 14 in eine Arbeitsposition geschwenkt bzw. gedreht werden können. Der Objektivrevolver 14 ist um einem Rotationsachse 18 drehbar. Das ist der Arbeitsposition befindliche Objektiv 16 definiert eine optische Achse 20. Im Fußteil 10 des Mikroskops kann z. B. eine Beleuchtungseinrichtung 22 vorgesehen sein, die ein Objekt (nicht dargestellt), das sich in einer Tischebene 24 befindet, beleuchtet. Die Rotationsachse 18 und die optische Achse 20 sind derart räumlich angeordnet, dass eine durch sie definierte Ebene zu der ersten oder zweiten Seitenwand 4 und 6 des Mikroskops parallel ist.

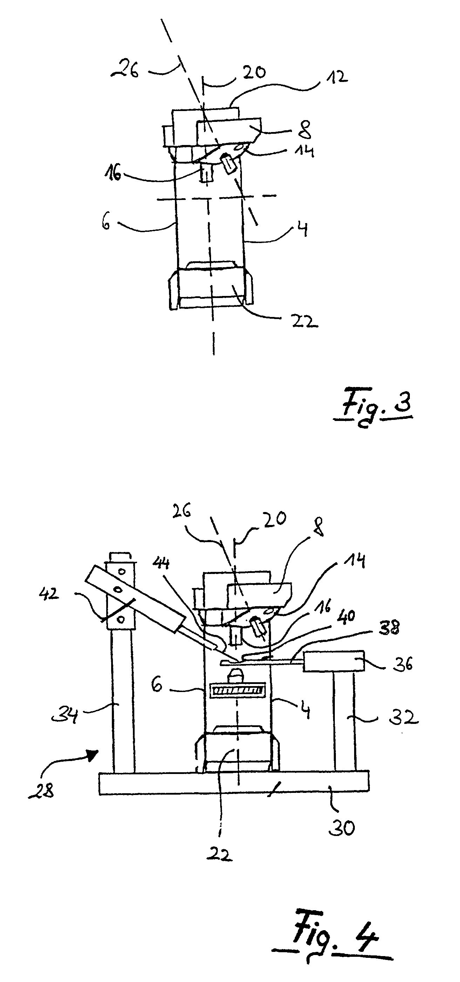

Fig. 2 beschreibt ein Mikroskop gemäß der gegenwärtigen Erfindung, dabei werden für gleiche Bauelemente gleiche Bezugszeichen verwendet. Das Mikroskop besteht ebenfalls aus einem Stativ 2, das eine erste und zweite Seitenwand 4 und 6 definiert. Die erste und zweite Seitenwand 4 und 6 sind durch eine Stirnwand 8 und eine Rückenwand 3 miteinander verbunden. Das Mikroskop weist ebenfalls im Kopfteil 12 einen Objektivrevolver 14 auf, der mehrere Objektive 16 trägt. Der Objektivrevolver 14 ist um eine optische Achse 26 (siehe Fig. 3) drehbar, wodurch die auf dem Objektivrevolver 14 angeordneten Objektive 16 jeweils in eine Arbeitsposition gebracht werden können. Das in einer Arbeitsposition befindliche Objektiv 16 definiert eine optische Achse 20. Ebenso ist im Fußteil 10 des Mikroskops eine Beleuchtungseinrichtung 22 vorgesehen, die ein Objekt (nicht dargestellt), das sich in der Tischebene 24 eines Objekttisches befindet, beleuchtet.

Die erfindungsgemäße Anordnung der optische Achse 26 des Objektivrevolvers ist in der Frontalansicht des Mikroskops in Fig. 3 dargestellt. Wie bereits in Fig. 2 beschrieben, definiert der Objektivrevolver 14 die Rotationsachse 26. Der Objektivrevolver 14 ist derart angeordnet, dass dessen Rotationsachse 26 bezüglich der ersten oder zweiten Seitenwand 4 oder 6 geneigt ist. Die Neigung der Rotationsachse bezüglich einer der Seitenwände 4 und 6 kann im Bereich von 10° bis 45° liegen. In einer besonderen Ausführungsform berägt die Neigung 22,5°. Die Bestimmung des Neigungswinkels kann ebenfalls zwischen der optischen Achse und der Drehachse 26 des Objektivrevolvers 14 erfolgen. Bezüglich des Standes der Technik (siehe Fig. 1), bei dem die Rotationsachse 18 des Objektivrevolvers 14 auf die Rückwand 3 des Mikroskops hin geneigt ist, ist die Rotationsachse 26 gemäß der Erfindung derart angeordnet, dass sie eine durch die erste und zweite Seitenwand 4 und 6 definierte Ebene scheidet. In anderen Worten ausgedrückt: Der Objektivrevolver 14 des Mikroskops ist seitlich versetzt angeordnet. Im vorliegenden Ausführungsbeispiel ist der Versatz auf die erste Seitenwand 4 hin definiert. Durch den entsprechenden Versatz des Objektivrevolvers 14 und die sich daraus ergebende Neigung und Anordnung der Rotationsachse 26 bewirken beim Objektivwechsel eine Bewegung der Objektive, die im Bereich der Arbeitsstellung eines Objektivs im Wesentlichen linear verläuft. "Im Wesentlichen linear" bedeutet hier, dass das Objektiv 16 z. B. eine Bewegungskurve durchläuft, die von der Stirnwand 8 auf die Rückwand 3 hin gerichtet ist und dabei geradlinig verläuft.

In Fig. 4 ist das Mikroskop mit der erfindungsgemäßen Anordnung des Objektivrevolvers 14 des Mikroskops in Verbindung mit einem Arbeitstisch 28 dargestellt. Der Arbeitstisch 28 besteht aus einer Basisplatte 30, auf der eine erste Montierung 32 und eine zweite Montierung 34 angebracht sind. Die erste Montierung 32 trägt ein Halteelement 36, an dem ein Tisch 38 befestigt ist. Der Tisch 38 ist als sogenannte fixed stage ausgebildet. Auf dem Tisch ist eine Vertiefung 40 vorgesehen, in der sich das zu untersuchende oder zu behandelnde Objekt (nicht dargestellt) befindet. Da die Beleuchtung des Objekts von unten aus erfolgt, ist es selbstverständlich, dass der Tisch 38 oder die Vertiefung 40 transparent ausgebildet sind. Die zweite Montierung 34 trägt einen Manipulator 42, an dessen vorderen Ende eine Nadel 44 oder eine Pipette oder ähnliches angebracht sein kann. Der Manipulator 42 und die daran angebrachte Nadel 44 werden dazu verwendet, das Objekt, was z. B. eine biologische Zelle sein kann, anzustechen und entsprechend dadurch zu verändern. Im vorliegenden Ausführungsbeispiel steht das Mikroskop auf der Bodenplatte 30. Für einen Fachmann ist es selbstverständlich, das jede andere Anordnung von Arbeitstisch und Mikroskop möglich ist, die gewährleistet, dass die optische Achse 20, die Vertiefung 40 des Tisches 30 und die Beleuchtungseinrichtung 22 des Mikroskops im Bereich der optischen Achse 20 liegen. Aus Fig. 4 wird auch der Vorteil der erfindungsgemäßen Anordnung der Rotationsachse 26 des Objektivrevolvers 14 deutlich. Durch die Anordnung des Manipulators 42 mit der Nadel 44 ist auf diese Seite des Arbeitstisches 28 die Rotationsbewegung eines herkömmlich angeordneten Objektivrevolvers 14 (siehe Fig. 1) erheblich eingeschränkt. Eine Rotation des Objektivrevolvers könnte sehr leicht zu einer Beschädigung der Nadel 44 führen. Wie bereits oben beschrieben, ermöglicht die erfindungsgemäße Anordnung der Rotationsachse 26 des Objektivrevolvers 14 ergibt eine Bewegungskurve der zu wechselnden Objektive 16 von der Stirnwand 8 auf die Rückwand 3 des Mikroskops hin. Dabei ist die Bewegungskurve der Objektive 14 im Bereich der Vertiefung 40 bzw. der Nadel 44 des Manipulators 42 im Wesentlichen linear. Eine Ausschwenkbewegung der Objektive in Richtung der Nadel 44 des Manipulators 42 wird vermieden und eine Beschädigungsgefahr erheblich reduziert.

Zellkulturen oder Zellen befinden sich in einer physiologischen Flüssigkeit, die in der Vertiefung 40 des Tisches 38 eingebracht ist. Zur mikroskopischen Untersuchung tauchen dann die Objektive in die physiologische Flüssigkeit ein. Für einen Objektivwechsel muss der Teil des Mikroskops, der den Objektivrevolver 14 trägt, entsprechend verfahren werden. Im vorliegenden Ausführungsbeispiel geschieht dies motorisch (ein entsprechender Motor bzw. dazu erforderliche Mechanik ist aus Gründen der Übersichtlichkeit nicht dargestellt). Ist ein Objektivwechsel erforderlich, wird der Teil des Mikroskops, der den Objektivrevolver 14 trägt, in Richtung der optischen Achse 20 vertikal angehoben. Dadurch wird das Objektiv 16 aus der physiologischen Flüssigkeit entfernt und auch entsprechend von dem Manipulatoren wegbewegt, damit mit Sicherheit eine Beschädigung bzw. ein ungehinderter Objektivwechsel möglich ist. Befindet sich nun das Objektiv in einer entsprechenden Lage, die eine freie Drehung des Objektivrevolvers 14 ermöglicht, wird ein Motor (nicht dargestellt) betätigt, der den Objektivrevolver 14 um seine Drehachse 26 dreht und ein neues Objektiv 16 in die Arbeitsposition bringt, die schließlich mit der optischen Achse 20 fluchtet. Der Motor, der den Teil des Mikroskops mit dem Objektivrevolver 14 in Richtung der optischen Achse verfahren hat, senkt nun diesen entsprechend ab. Die Absenkung wird derart ausgeführt, dass das Objektiv weiter als erforderlich in die physiologische Flüssigkeit eintaucht, um dadurch eine ausreichende Benetzung der Objektivvorderseite zu erreichen. Das Objektiv 16 wird anschließend in eine grobe Fokuslage zurückgefahren und eine Feinfokussierung wird mittels einer Autofokus-Einrichtung (nicht dargestellt) durchgeführt. Die erfindungsgemäße Anordnung des Objektivrevolvers 14 ermöglicht es, dass nach dem Objektivwechsel das Wiederauffinden der vor dem Objektivwechsel untersuchten Objektstelle automatisiert ist. Es ist somit garantiert, dass nach dem Objektivwechsel sich die gleiche Stelle des Objekts im Bildfeld befindet.

Die Erfindung wurde in Bezug auf eine besondere Ausführungsform beschrieben, es ist für einen Fachmann jedoch selbstverständlich, dass Abwandlungen und Änderungen durchgeführt werden können, ohne dabei den Schutzbereich der nachstehenden Ansprüche zu verlassen.

### TEILELISTE

- 2: Stativ
- 3: Rückwand
- 4: erste Seitenwand
- 6: zweite Seitenwand
- 8: Stirnwand
- 10: Fußteil
- 12: Kopfteil
- 14: Objektivrevolver
- 16: Objektiv
- 18: Rotationsachse
- 20: optische Achse
- 22: Beleuchtungseinrichtung
- 24: Tischebene
- 26: Rotationsachse
- 28: Arbeitstisch
- 30: Basisplatte
- 32: erste Montierung
- 34: zweite Montierung
- 36: Halteelement
- 38: Tisch
- 40: Vertiefung
- 42: Manipulator
- 44: Nadel

## Patentansprüche

1. Mikroskop mit einem Mikroskopstativ, das durch eine erste und eine zweite Seitenwand (4,6) definiert ist, wobei die erste und die zweite Seitenwand (4,6) durch eine Stirnwand (8) und eine Rückwand (3) miteinander verbunden sind, einem Objektivrevolver, der um eine Rotationsachse (26) drehbar ist und Objektive trägt, um diese in eine Arbeitsposition zu bringen, wobei eine optische Achse (20) eines Objektivs mit der Arbeitsposition zusammenfällt, **dadurch gekennzeichnet, dass** die Rotationsachse (26) und die optische Achse (20) eine Ebene definieren, die zu der ersten oder zweiten Seitenwand (4, 6) des Mikroskops senkrecht ist, und dass der Objektivrevolver (14) seitlich auf die erste oder zweite Seitenwand hin versetzt angeordnet ist, so dass die Rotationsachse (26) auf die erste und zweite Seitenwand (4, 6) hin geneigt ist, und dass beim Objektivwechsel eine Bewegung der Objektive, die im Bereich der Arbeitsstellung eine Bewegungskurve durchläuft, die von der Stirnwand (8) auf die Rückwand (3) hin gerichtet ist und dabei geradlinig verläuft.

2. Mikroskop nach Anspruch 1, **dadurch gekennzeichnet, dass** die optische Achse des in einer Arbeitsposition befindlichen Objektivs des Objektivrevolvers mit der Rotationsachse (26) einen Winkel einschließt, der zwischen 10° und 45° Winkelgraden liegt.

3. Mikroskop nach Anspruch 2, **dadurch gekennzeichnet, dass** die optische Achse mit der Rotationsachse (26) einen Winkel von 22,5° einschließt.

4. Mikroskop nach einem der Ansprüche 1 bis 3, **dadurch gekennzeichnet, dass** das Mikroskop einen Arbeitstisch umfasst, auf dem ein Tisch mit einer Vertiefung und mindestens ein Manipulator vorgesehen ist.

5. Mikroskop nach Anspruch 4, **dadurch gekennzeichnet, dass** mindestens ein Manipulator in den Bereich um die optische Achse eingreift des Objektivs in der Arbeitsposition eingreift.

6. Mikroskop nach Anspruch 4 und 5, **dadurch gekennzeichnet, dass** beim Objektivwechsel durch den Objektivrevolver die Objektive eine Bewegungsbahn beschreiben, die im Bereich der Vertiefung, im Bereich um die optische Achse und im Bereich einer Nadel des Manipulators im Wesentlichen linear ist.

7. Mikroskop nach einem der Ansprüche 4 bis 6, **dadurch gekennzeichnet, dass** in der Vertiefung (40) einer physiologischen Flüssigkeit eingebracht ist, in die zur Untersuchung von Zellkulturen oder Zellen die Objektive in die physiologische Flüssigkeit eintauchen.

8. Verfahren zum Objektivwechsel bei einem Mikroskop, das einen Arbeitstisch umfasst, auf dem ein Tisch mit einer Vertiefung vorgesehen ist, in die eine physiologische Flüssigkeit eingebracht ist, und dass mindestens ein Manipulator vorgesehen ist, wobei der mindestens eine Manipulator in den Bereich um eine optische Achse eines in der Arbeitsposition befindlichen Objektivs eingreift, **gekennzeichnet durch** die folgenden Schritte:
- vertikales Anheben eines Teils des Mikroskops, das einen Objektivrevolver (14) umfasst, in Richtung der optischen Achse (20), wobei **dadurch** das in der Arbeitsposition befindliche Objektiv aus der physiologischen Flüssigkeit entfernt wird,
- freies Drehen des Objektivrevolvers (14) wobei ein anderes Objektiv in die Arbeitsposition verbracht wird,
- Absenken des Teils des Mikroskops und dabei Eintauchen des Objektivs, weiter als erforderlich, in die physiologische Flüssigkeit, und
- Zurückfahren des Objektivs in eine grobe Fokuslage und Durchführen einer Feinfokussierung mittels einer Autofokus-Einrichtung, wobei sich nach dem Objektivwechsel die gleiche Stelle des Objekts im Bildfeld des Objektivs befindet.

9. Verfahren nach Anspruch 8, **dadurch gekennzeichnet, dass** das Mikroskop mit einem Mikroskopstativ versehen ist, das durch eine erste und eine zweite Seitenwand definiert ist, wobei die erste und die zweite Seitenwand durch eine Stirnwand und eine Rückwand miteinander verbunden sind, die Rotationsachse (26) des Objektivrevolvers (14) und die optische Achse (20) definieren eine Ebene, die zu der ersten oder zweiten Seitenwand (4, 6) des Mikroskops senkrecht ist, und dass der Objektivrevolver (14) seitlich auf die erste oder zweite Seitenwand hin versetzt angeordnet ist, so dass die Rotationsachse (26) auf die erste und zweite Seitenwand (4, 6) hin geneigt ist, und dass beim Objektivwechsel eine Bewegung der Objektive, die im Bereich der Arbeitsstellung eine Bewegungskurve durchlaufen wird, die von der Stirnwand (8) auf die Rückwand (3) hin gerichtet ist und dabei geradlinig verläuft.

10. Verfahren nach Anspruch 8, **dadurch gekennzeichnet, dass** die optische Achse des in einer Arbeitsposition befindlichen Objektivs des Objektivrevolvers mit der Rotationsachse (26) einen Winkel einschließt, der zwischen 10° und 45° Winkelgraden liegt.

11. Verfahren nach Anspruch 10, **dadurch gekennzeichnet, dass** die optische Achse mit der Rotationsachse (26) einen Winkel von 22,5° einschließt.

## Claims

1. Microscope having a microscope stand which is defined by a first and a second sidewall (4, 6), the first and the second sidewall (4, 6) being connected to one another by a front wall (8) and a rear wall (3), having an objective revolver which can be rotated about a rotation axis (26) and carries objectives in order to bring the latter into an operating position, an optical axis (20) of an objective coinciding with the operating position, **characterized in that** the rotation axis (26) and the optical axis (20) define a plane which is perpendicular to the first or second sidewall (4, 6) of the microscope, and **in that** the objective revolver (14) is arranged in a laterally offset fashion towards the first or second sidewall such that the rotation axis (26) is inclined towards the first and second sidewall (4, 6), and **in that** when objectives are being changed a movement of the objectives which traverses a movement curve in the region of the operating position which is directed from the front wall (8) towards the rear wall (3) and runs rectilinearly in the process.

2. Microscope according to Claim 1, **characterized in that** the optical axis of that objective of the objective revolver which is in an operating position encloses with the rotation axis (26) an angle which is between 10° and 45° of angle.

3. Microscope according to Claim 2, **characterized in that** the optical axis encloses an angle of 22.5° with the rotation axis (26).

4. Microscope according to one of Claims 1 to 3, **characterized in that** the microscope comprises a work stage on which there is provided a stage with a depression and at least one manipulator.

5. Microscope according to Claim 4, **characterized in that** at least one manipulator engages in the region about the optical axis of the objective in the operating position.

6. Microscope according to Claims 4 and 5, **characterized in that** when objectives are being changed by the objective revolver the objectives describe a movement track which is substantially linear in the region of the depression, in the region about the optical axis and in the region of a needle of the manipulator.

7. Microscope according to one of Claims 4 to 6, **characterized in that** there is introduced into the depression (40) a physiological liquid into which the objectives dip in order to examine cell cultures or cells.

8. Method for changing objectives in a microscope, which comprises a work stage on which there is provided a stage with a depression into which a physiological liquid is introduced, and in which at least one manipulator is provided, the at least one manipulator engaging in the region about an optical axis of an objective located in the operating position, **characterized by** the following steps:
- vertically raising a part of the microscope which comprises an objective revolver (14) in the direction of the optical axis (20), the result of this being to remove the objective located in the operating position from the physiological liquid,
- freely rotating the objective revolver (14), another objective being brought into the operating position in the process,
- lowering the part of the microscope and thereby dipping the objective further than necessary into the physiological liquid, and
- retracting the objective into a coarse focal position and carrying out fine focusing by means of an autofocus device, the same point of the object being located in the image field of the objective after the change of objectives.

9. Method according to Claim 8, **characterized in that** the microscope is provided with a microscope stand which is defined by a first and a second sidewall, in which the first and the second sidewall are connected to one another by a front wall and a rear wall, the rotation axis (26) of the objective revolver (14) and the optical axis (20) define a plane which is perpendicular to the first or second sidewall (4, 6) of the microscope, and in which the objective revolver (14) is arranged in a laterally offset fashion towards the first or second sidewall such that the rotation axis (26) is inclined towards the first and second sidewall (4, 6), and in which when objectives are being changed a movement of the objectives which will traverse a movement curve in the region of the operating position which is directed from the front wall (8) to the rear wall (3) and runs rectilinearly in the process.

10. Method according to Claim 8, **characterized in that** the optical axis of that objective of the objective revolver which is in an operating position encloses with the rotation axis (26) an angle which is between 10° and 45° of angle.

11. Method according to Claim 10, **characterized in that** the optical axis encloses an angle of 22.5° with the rotation axis (26).

## Revendications

1. Microscope comprenant un pied de microscope qui est défini par une première et une deuxième paroi latérale (4, 6), la première et la deuxième paroi latérale (4, 6) étant reliées entre elles par une paroi frontale (8) et une paroi arrière (3), un revolver à objectifs qui peut tourner autour d'un axe de rotation (26) et porte des objectifs afin de les amener dans une position de travail, un axe optique (20) d'un objectif coïncidant avec la position de travail, **caractérisé en ce que** l'axe de rotation (26) et l'axe optique (20) définissent un plan qui est perpendiculaire à la première ou à la deuxième paroi latérale (4, 6) du microscope et que le revolver à objectifs (14) est monté latéralement de manière décalée sur la première ou la deuxième paroi latérale de telle sorte que l'axe de rotation (26) soit incliné vers la première et la deuxième paroi latérale (4, 6) et qu'en cas de changement d'objectif, un mouvement des objectifs franchit une courbe de mouvement dans la zone de la position de travail qui est dirigée de la paroi frontale (8) vers la paroi arrière (3) et est ainsi rectiligne.

2. Microscope selon la revendication 1, **caractérisé en ce que** l'axe optique de l'objectif du revolver à objectifs qui se trouve en position de travail inclut avec l'axe de rotation (26) un angle qui est compris entre 10° et 45° degrés angulaires.

3. Microscope selon la revendication 2, **caractérisé en ce que** l'axe optique inclut avec l'axe de rotation (26) un angle de 22,5°.

4. Microscope selon l'une des revendications 1 à 3, **caractérisé en ce que** le microscope comprend une table de travail sur laquelle est prévue une table avec un enfoncement et au moins un manipulateur.

5. Microscope selon la revendication 4, **caractérisé en ce qu'**au moins un manipulateur pénètre dans la zone autour de l'axe optique de l'objectif en position de travail.

6. Microscope selon la revendication 4 et 5, **caractérisé en ce qu'**en cas de changement d'objectif par le revolver à objectifs, les objectifs décrivent une trajectoire de mouvement qui est pour l'essentiel linéaire dans la zone de l'enfoncement, dans la zone autour de l'axe optique et dans la zone d'une aiguille du manipulateur.

7. Microscope selon l'une des revendications 4 à 6, **caractérisé en ce qu'**un liquide physiologique est introduit dans l'enfoncement (40), dans lequel les objectifs sont immergés dans le liquide physiologique pour examiner des cultures cellulaires ou des cellules.

8. Procédé de changement d'objectif sur un microscope qui comprend une table de travail sur laquelle est prévue une table avec un enfoncement dans lequel est introduit un liquide physiologique et qu'il est prévu au moins un manipulateur, l'au moins manipulateur pénétrant dans la zone autour d'un axe optique d'un objectif qui se trouve en position de travail, **caractérisé par** les étapes suivantes :
- levage vertical d'une partie du microscope qui comprend un revolver à objectifs (14) en direction de l'axe optique (20), l'objectif qui se trouve en position de travail étant ainsi retiré du liquide physiologique,
- rotation libre du revolver à objectifs (14), un autre objectif étant amené en position de travail,
- descente de la partie du microscope et ainsi immersion de l'objectif plus loin que nécessaire dans le liquide physiologique et
- recul de l'objectif en une position de mise au point approximative et réalisation d'une mise au point précise au moyen d'un dispositif de mise au point automatique, les mêmes endroits de l'objet se trouvant dans le champ d'image de l'objectif après le changement d'objectif.

9. Procédé selon la revendication 8, **caractérisé en ce que** le microscope est muni d'un pied de microscope qui est défini par une première et une deuxième paroi latérale, la première et la deuxième paroi latérale étant reliées entre elles par une paroi frontale et une paroi arrière, l'axe de rotation (26) du revolver à objectifs (14) et l'axe optique (20) définissent un plan qui est perpendiculaire à la première ou à la deuxième paroi latérale (4, 6) du microscope et que le revolver à objectifs (14) est monté latéralement de manière décalée sur la première ou la deuxième paroi latérale de telle sorte que l'axe de rotation (26) soit incliné vers la première et la deuxième paroi latérale (4, 6) et qu'en cas de changement d'objectif, un mouvement de l'objectif franchira une courbe de mouvement dans la zone de la position de travail qui est dirigée de la paroi frontale (8) vers la paroi arrière (3) et est ainsi rectiligne.

10. Procédé selon la revendication 8, **caractérisé en ce que** l'axe optique de l'objectif du revolver à objectifs qui se trouve en position de travail inclut avec l'axe de rotation (26) un angle qui est compris entre 10° et 45° degrés angulaires.

11. Procédé selon la revendication 10, **caractérisé en ce que** l'axe optique inclut avec l'axe de rotation (26) un angle de 22,5°.
